# EUROPÄISCHE PATENTSCHRIFT

(11) **EP 2 006 572 B1**
(45) Veröffentlichungstag und Bekanntmachung des Hinweises auf die Patenterteilung: **04.11.2015**
(21) Anmeldenummer: 08008082.3
(22) Anmeldetag: 26.04.2008
(51) Int. Cl.: F16F 15/26

(54) **Vorrichtung zum Massenausgleich für eine Hubkolben-Brennkraftmaschine**
Device for mass compensation for a reciprocating piston combustion engine
Dispositif d'équilibrage des masses pour un moteur à combustion interne à piston

(30) Priorität: 21.06.2007 DE 102007028727
(43) Veröffentlichungstag der Anmeldung: 24.12.2008
(73) Patentinhaber: Bayerische Motoren Werke Aktiengesellschaft, 80809 München (DE)
(72) Erfinder: Albertz, Frank, Dr., 85391 Allershausen (DE); Gutzer, Ulrich, Dr., 80797 München (DE); Weippert, Jochen, 81369 München (DE)

(56) Entgegenhaltungen:
- DE-A1- 3 625 246
- DE-A1- 19 851 547
- DE-C- 975 104
- GB-A- 1 430 873
- JP-A- S5 839 863
- US-A- 1 163 832

## Beschreibung

Die Erfindung betrifft eine Vorrichtung zum Massenausgleich für eine Hubkolben-Brennkraftmaschine mit den Merkmalen aus dem Oberbegriff des Patentanspruchs 1.

Zum technischen Umfeld wird beispielsweise auf die deutsche Offenlegungsschrift DE 102 57 562 A1 verwiesen, in der ein Massenausgleich für eine Hubkolben-Brennkraftmaschine beschrieben ist, bei dem die zwei gegenläufig zueinander drehenden Ausgleichswellen weitgehend horizontal nebeneinander, geodätisch unterhalb der Kurbelwelle der Hubkolben-Brennkraftmaschine angeordnet sind.

Um ein Verzahnungsrasseln einer gattungsgemäßen Vorrichtung zum Massenkraft- und/oder Momentenausgleich für eine Hubkolben-Brennkraftmaschine zu verhindern, wird in der deutschen Gebrauchsmusterschrift, der DE 202 01 006 U1 folgende Bauart vorgeschlagen:
⇒ dass das Massenausgleichsgetriebe über ein Getriebe mit der Kurbelwelle der Brennkraftmaschine verbunden ist,
⇒ dass eine erste Ausgleichswelle des Massenausgleichsgetriebes über eine Zahnradstufe mit einer zweiten Ausgleichswelle verbunden ist und
⇒ dass eine in einer Ölwanne der Brennkraftmaschine angeordnete Ölpumpe an die zweite Ausgleichswelle gekoppelt ist und dass eine zusätzliche zu- oder abschaltbare Ölpumpe an die erste Ausgleichswelle gekoppelt ist.

Um den Bauraum für eine gattungsgemäße Vorrichtung zum Massen- und/oder Momentenausgleich einer Hubkolben-Brennkraftmaschine zu verringern, wird in der europäischen Patentanmeldung EP 1 031 760 A1, von der diese Erfindung ausgeht, vorgeschlagen, dass eine Ausgleichswelle mit zwei drehfest mit ihr verbundenen Zahnrädern versehen ist, von denen das eine zum Antrieb der Ausgleichswelle mit einem an der Kurbelwelle ausgebildeten Zahnrad in Eingriff ist und das andere mit einem Ausgleichsgewicht ausgebildet ist und ein weiteres Zahnrad antreibt, das die mit einem weiteren Ausgleichsgewicht ausgebildete Ausgleichswelle bildet und gleichachsig mit der Kurbelwelle auf dieser gelagert ist, wobei die Ausgleichswellen voneinander radial sowie senkrecht zur Motormittellinie beabstandet sind.

Auch wenn der Stand der Technik, von dem diese Erfindung ausgeht, keine prinzipiellen Nachteile aufweist, liegt der Erfindung die Aufgabe zugrunde, den Bauraum nochmals zu verringern.

Diese Aufgabe wird durch die Merkmale im kennzeichnenden Teil des Patentanspruchs 1 gelöst.
Durch die geeignete Ausgestaltung der Ausgleichsgewichte bei vertikaler Anordnung der Ausgleichswellen ist ein Ineinanderkämmen der gegenläufigen Ausgleichsgewichte möglich. Hiermit ist ein deutlich verringerter Achsabstand und somit eine verringerte Bauhöhe im Vergleich zu den aus dem Stand der Technik bekannten Konzepten der gesamten Vorrichtung zum Massenausgleich für eine Hubkolben-Brennkraftmaschine möglich. Aufgrund der verringerten Bauhöhe ist weiter eine Gewichtsreduzierung für die gesamte Vorrichtung darstellbar. Weiter ist durch den Höhenversatz der beiden gegensinnig drehenden Ausgleichswellen die Kompensation eines Massenmomentes zweiter Ordnung möglich.

Der Antrieb mittels der in der Schmiermittelpumpe ohnehin vorhandenen und lediglich zu verlängernden Durchtriebswelle ist ebenfalls bauraum- und kostengünstig im Vergleich zu einer separaten Antriebswelle vom vorderen Kettentrieb her.

Die Ausgestaltung gemäß Patentanspruch 2 erlaubt weitere konstruktive Freiheiten.

Mit der maximalen Beabstandung der Drehachsen der Ausgleichswellen gemäß Patentanspruch 3 wird die maximale Kompensation des Massenmomentes zweiter Ordnung erzielt.

Die Ausgestaltungen gemäß der Patentansprüche 5 und 6 sind besonders bevorzugte Ausführungsvarianten.

Im Folgenden ist die Erfindung anhand von zwei besonders bevorzugten Ausführungsbeispielen in sechs Figuren näher erläutert.
- Fig. 1: zeigt schematisch die Lage von zwei Ausgleichswellen zu vier unterschiedlichen Kurbelwellenwinkeln, gemäß dem Stand der Technik.
- Fig. 2: zeigt schematisch die Lage von zwei erfindungsgemäß angeordneten Ausgleichswellen zu vier unterschiedlichen Kurbelwellenwinkeln.
- Fig. 3: zeigt eine dreidimensionale Aufsicht auf zwei erfindungsgemäß angeordnete Ausgleichswellen.
- Fig. 4: zeigt eine dreidimensionale Aufsicht auf eine Kurbelwelle und zwei über eine Kette angebundene Ausgleichswellen.
- Fig. 5: zeigt eine Seitenansicht auf die Kurbelwelle und die zwei, über die Kette angebundenen Ausgleichswellen.
- Fig. 6: zeigt schematisch ein zweites, besonders bevorzugtes Ausführungsbeispiel mit zwei erfindungsgemäß angeordneten Ausgleichswellen.

Im Folgenden gelten für gleiche Bauelemente in allen Figuren die gleichen Bezugsziffern.

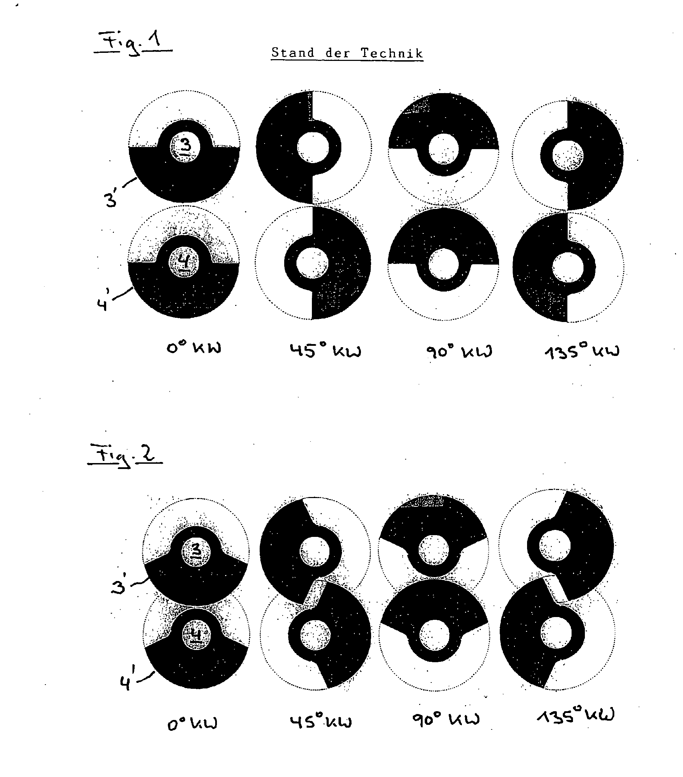

Fig. 1 zeigt schematisch in einer Stirnansicht dargestellt eine erste Ausgleichswelle 3 mit einem ersten Ausgleichsgewicht 3' und eine zweite Ausgleichswelle 4 mit einem zweiten Ausgleichsgewicht 4'. Die Ausgleichswellen 3, 4 sind vertikal übereinander angeordnet und zu vier unterschiedlichen Kurbelwellenwinkeln, 0° KW (Kurbelwinkel), 45° KW, 90° KW und 135° KW dargestellt, wobei nur die 0° KW Stellung beziffert ist. Die in Fig. 1 dargestellten Ausgleichswellen 3, 4 entsprechen dem Stand der Technik und weisen einen derart großen vertikalen Achsabstand auf, dass die Ausgleichsgewichte 3', 4' zu jeder Kurbelwellenwinkelstellung voneinander beabstandet sind.

Demgegenüber zeigt Fig. 2 schematisch die erste und die zweite Ausgleichswelle 3, 4 in einer erfindungsgemäßen Anordnung. Wie zu den unterschiedlichen Kurbelwellenwinkeln 0° KW, 45° KW, 90° KW und 135° KW zu erkennen ist, sind die erste und die zweite Ausgleichswelle 3, 4 mit einem derart geringen Achsabstand zueinander angeordnet, dass das erste und das zweite Ausgleichsgewicht 3', 4' miteinander kämmen. Durch die erfindungsgemäße Anordnung wird der benötigte Bauraum für die Vorrichtung zum Massenausgleich für eine Hubkolben-Brennkraftmaschine in vorteilhafter Weise deutlich minimiert.

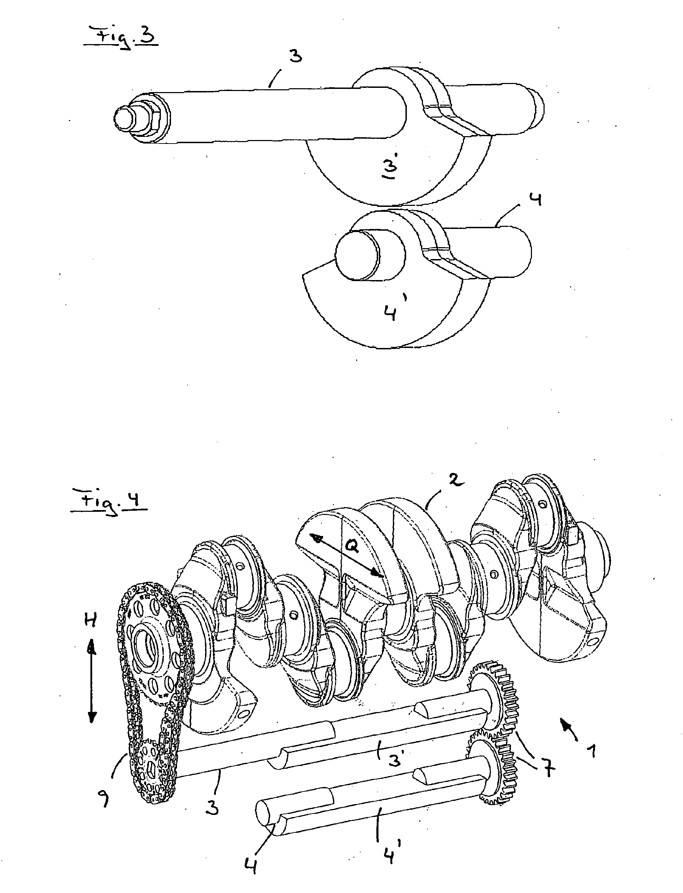

Fig. 3 zeigt eine dreidimensionale Aufsicht auf zwei erfindungsgemäß angeordnete Ausgleichswellen 3, 4 mit ihren Ausgleichsgewichten 3', 4'. Auch anhand dieser konkreten konstruktiven Ausgestaltung ist zu sehen, wie gering der Achsabstand der beiden Ausgleichswellen 3, 4 auszuführen ist, wodurch die minimale Baugröße erzielt wird.

Fig. 4 zeigt eine dreidimensionale Aufsicht auf eine Kurbelwelle 2 mit zwei über eine Kette 9 angebundenen Ausgleichswellen 3, 4. Die erste Ausgleichswelle 3 mit dem ersten Ausgleichsgewicht 3' ist von der Kurbelwelle 2 mit einer doppelten Kurbelwellendrehzahl antreibbar. Die zweite Ausgleichswelle 4 mit dem zweiten Ausgleichsgewicht 4' ist über ein erstes Stirnzahnradpaar 7 (Stirnradstufe) von der ersten Ausgleichswelle 3 gegenläufig antreibbar. Eine Brennkraftmaschinenhochachsrichtung H sowie eine Brennkraftmaschinenquerachsrichtung Q sind durch Doppelpfeile schematisch dargestellt.

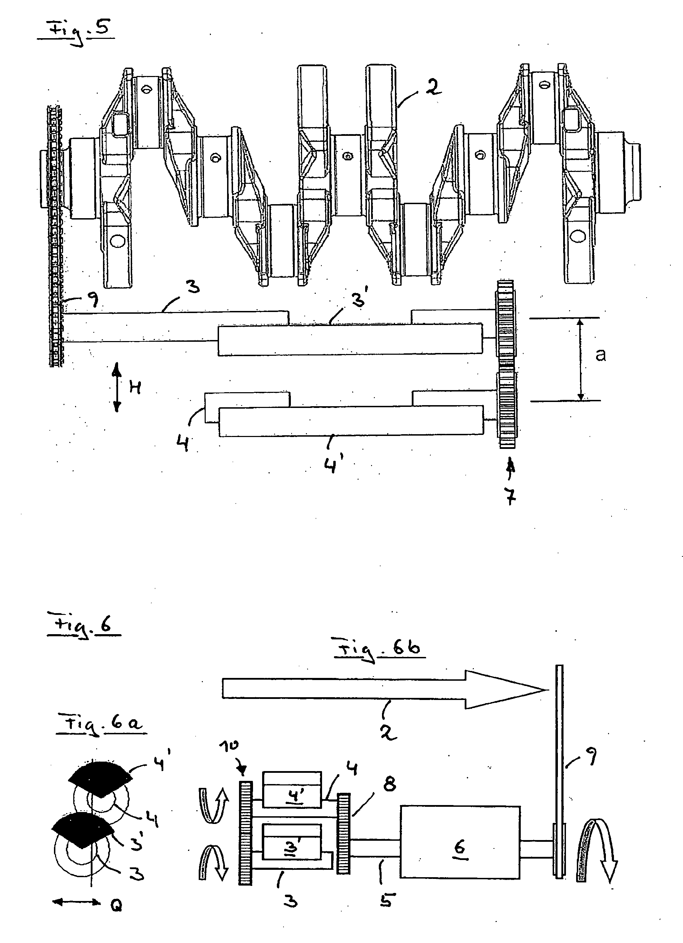

Fig. 5 zeigt die gleiche Anordnung aus Fig. 4 nochmals in einer Seitenansicht. Der Achsabstand der zwei Ausgleichswellen 3, 4 ist mit a gekennzeichnet. In den Fig. 4 und 5 ist ein geometrischer Sonderfall dargestellt, bei dem der Achsabstand a einer Hubhöhe eines nicht dargestellten Kolbens entspricht. Für diesen Achsabstand werden die Massenmomente zweiter Ordnung vollständig eliminiert. Der Achsabstand ist zur besseren Darstellung vergrößert dargestellt, so dass die Ausgleichsgewichte 3', 4' in den Fig. 4 und 5 nicht erfindungsgemäß miteinander kämmen.

Fig. 6 zeigt schematisch ein besonders bevorzugtes Ausführungsbeispiel der erfindungsgemäßen Anordnung.

In Fig. 6a ist eine Stirnansicht der erfindungsgemäßen Anordnung der ersten und der zweiten, in Fig. 6b in einer Seitenansicht dargestellten Ausgleichswellen 3, 4, dargestellt. An die Ausgleichswellen 3, 4 sind als schwarze Kreissegmente die Ausgleichsgewichte 3', 4' angeordnet. Die vertikal übereinander angeordneten Ausgleichswellen 3, 4 weisen in diesem Ausführungsbeispiel auch einen Versatz in der Brennkraftmaschinenquerachsenrichtung Q auf.

In Fig. 6b ist schematisch die Kurbelwelle 2 durch einen Pfeil dargestellt, mit der über die Kette 9 eine Durchtriebswelle 5 einer Schmiermittelpumpe 6 antreibbar ist. Eine Drehrichtung der Durchtriebswelle 5 ist mit einem Drehpfeil dargestellt. Die Durchtriebswelle 5 treibt ihrerseits über ein zweites Stirnzahnradpaar 8 mit einer geeigneten Übersetzung die zweite Ausgleichswelle 4 mit dem zweiten Ausgleichsgewicht 4' an. Über ein drittes Stirnzahnradpaar 10 treibt die zweite Ausgleichswelle 4 die erste Ausgleichswelle 3 mit dem ersten Ausgleichswellengewicht 3' an. Die gegenläufigen Drehrichtungen der Ausgleichswellen 3, 4 sind wiederum durch Drehpfeile schematisch dargestellt. Die Drehzahl der Ausgleichswellen 3, 4 entspricht der doppelten Kurbelwellendrehzahl.

Der Antrieb der Ausgleichswellen 3, 4 mittels der in der Schmiermittelpumpe 6 ohnehin vorhandenen und lediglich zu verlängernden Durchtriebswelle 5 ist in vorteilhafter Weise bauraum- und kostengünstig im Vergleich zu einer separaten Antriebswelle vom vorderen Kettentrieb her. Die Vorteile dieser besonders bevorzugten Ausführungsvariante liegen in der kompakten und leichten Bauform, einer minimalen Teileanzahl, was die Kosten und das Package reduziert.

Der Antrieb einer der beiden Ausgleichswellen 3, 4 erfolgt vorzugsweise durch eine Stirnradstufe, einen Ketten- oder Riementrieb oder einer Kombination aus diesen Möglichkeiten von der Kurbelwelle 2 aus. Dabei wird der Drehsinn der geodätisch oben liegenden Ausgleichswelle 3, 4 so gewählt, dass er der Kurbelwellendrehrichtung entspricht. Die beiden Ausgleichswellen 3, 4 und die verbindende, z. B. Stirnradstufe (Synchronstufe) bilden zusammen mit einem Ausgleichswellengehäuse ein Ausgleichswellenmodul. Durch Flexibilität im Gießverfahren (Druckgussverfahren) ergeben sich Kosten- und Gewichtsvorteile.

Durch den Höhenversatz der beiden gegensinnig laufenden Ausgleichswellen 3, 4 ist die Kompensation eines Massenmomentes zweiter Ordnung möglich. Durch den Achsabstand (a) der beiden Ausgleichswellen 3, 4 wird der Kompensationsgrad bezüglich der Massenmomente zweiter Ordnung festgelegt. Eine volle Kompensation wird bei einer Höhendifferenz im Bereich der Pleuellänge der Brennkraftmaschine erreicht.

Durch die höhenversetzt gegensinnige Kraftwirkung im Amplitudenminimum der erzeugten Gesamtkraft ergibt sich beim Betrieb der Hubkolben-Brennkraftmaschine eine geringere Abstandsänderung (aufgrund der Lagerspiele) der beiden Drehachsen der Ausgleichswellen 3, 4, als im Vergleich zu einer horizontalen Anordnung, zueinander. Hieraus resultiert ein geringeres Verdrehflankenspiel in der Synchrontufe, wodurch in vorteilhafter Weise akustische Vorteile erzielt werden.

### Bezugszeichenliste:

- 1.: Vorrichtung
- 2.: Kurbelwelle
- 3.: erste Ausgleichswelle
- 3': erstes Ausgleichsgewicht
- 4.: zweite Ausgleichswelle
- 4': zweites Ausgleichsgewicht
- 5.: Durchtriebswelle
- 6.: Schmiermittelpumpe
- 7.: erste Stirnzahnräder
- 8.: zweite Stirnzahnräder
- 9.: Kette
- 10.: dritte Stirnzahnräder

## Patentansprüche

1. Vorrichtung (1) zum Massenausgleich für eine Hubkolben-Brennkraftmaschine mit zumindest einem Kolben, der von einer Kurbelwelle (2) über ein Pleuel antreibbar ist, wobei für die Vorrichtung (1) eine erste Ausgleichswelle (3) mit einem ersten Ausgleichsgewicht (3') und eine zweite Ausgleichwelle (4) mit einem zweiten Ausgleichsgewicht (4') vorgesehen sind, die in einer Brennkraftmaschinenhochachsenrichtung (H) übereinander angeordnet sind, wobei zumindest eine Ausgleichswelle (3, 4) von der Kurbelwelle (2) mit einer doppelten Kurbelwellendrehzahl rotatorisch antreibbar ist und die andere Ausgleichswelle (4, 3) mit der doppelten Kurbelwellendrehzahl mit einer zu der von der Kurbelwelle (2) angetriebenen Ausgleichswelle (3, 4) entgegen gesetzten Drehrichtung antreibbar ist,
**dadurch gekennzeichnet, dass** die erste und die zweite Ausgleichswelle (3, 4) derart angeordnet sind, dass bei rotierenden Ausgleichswellen (3, 4) das erste und das zweite Ausgleichsgewicht (3', 4') miteinander kämmbar angeordnet sind und wobei der Antrieb der ersten oder der zweiten Ausgleichswelle (3, 4) über eine Durchtriebswelle (5) einer Schmiermittelpumpe (6) erfolgt, die von der Kurbelwelle (2) antreibbar ist.

2. Vorrichtung nach Patentanspruch 1,
**dadurch gekennzeichnet, dass** die Ausgleichswellen (3, 4) in einer Brennkraftmaschinenquerachsenrichtung (Q) gegeneinander versetzt angeordnet sind.

3. Vorrichtung nach Patentanspruch 1 oder 2, wobei die Ausgleichswellen um eine Drehachse rotieren,
**dadurch gekennzeichnet, dass** die Drehachsen in der Brennkraftmaschinenhochachsenrichtung (H) höchstens um eine Hubhöhe eines Kolbens (a) voneinander beabstandet sind.

4. Vorrichtung nach einem der Patentansprüche 1 bis 3,
**dadurch gekennzeichnet, dass** eine Ausgleichswelle (3, 4) von der anderen Ausgleichswelle (4, 3) über miteinander kämmende erste Stirnzahnräder (7) antreibbar ist.

5. Vorrichtung nach einem der Patentansprüche 1 bis 3,
**dadurch gekennzeichnet, dass** die erste oder die zweite Ausgleichswelle (3, 4) von der Durchtriebswelle (5) über miteinander kämmende zweite Stirnzahnräder (8) antreibbar ist.

6. Vorrichtung nach einem der Patentansprüche 1 bis 5,
**dadurch gekennzeichnet, dass** die erste oder die zweite Ausgleichswelle (3, 4) oder die Durchtriebswelle (5) von der Kurbelwelle (2) über kämmende Stirnzahnräder oder eine Kette (9) antreibbar ist.

## Claims

1. A balancing device (1) for a reciprocating internal combustion engine comprising at least one piston driven by a crankshaft (2) via a connecting rod, wherein the device (1) has a first balancer shaft (3) with a first balancing weight (3') and a second balancer shaft (4) with a second balancing weight (4'), disposed in the vertical axial direction (H) of an internal combustion engine, wherein at least one balancer shaft(3,4) is drivable in rotation by the crankshaft (2) at double speed and the other balancer shaft (4,3) is drivable at double speed by the crankshaft (2) in the opposite direction of rotation to that of the balancer shaft (3,4),
**characterised in that** the first and the second balancer shaft (3, 4) are disposed so that when the balancer shafts (3, 4) are rotating the first and the second balancing weight (3', 4') mesh in one another and wherein the first or the second balancer shaft (3,4) is driven via the driving shaaft of a lubricant pump (6) drivable by the crankshaft (2).

2. A device according to claim 1,
**characterised in that** the balancer shafts (3, 4) are offset from one another in a transverse axial direction (Q) of an internal combustion engine.

3. A device according to claim 1 or claim 2,
wherein the balancer shafts rotate around an axis of rotation, **characterised in that** the axes of rotation in the vertical axial direction (H) of the internal combustion engine are separated from one another by up to a stroke of a piston (a).

4. A device according to any of claims 1 to 3,
**characterised in that** a balancer shaft (3, 4) is drivable by the other shaft (4, 3) via meshing first radial toothed wheels (7).

5. A device according to any of claims 1 to 3,
**characterised in that** the first or the second balancer shaft (3,4) is drivable by the driving shaft (5) via meshing second cylindrical gearwheels.

6. A device according to any of claims 1 to 5,
**characterised in that** the first or the second balancer shaft (3,4) or the driving shaft (5) is drivable by the crankshaft (2) via meshing gearwheels or a chain (9).

## Revendications

1. Dispositif (1) pour équilibrer les masses d'un moteur à combustion interne à pistons linéaires, ayant au moins un piston entraîné par le vilebrequin (2) par l'intermédiaire d'une bielle,
- le dispositif (1) ayant un premier arbre d'équilibrage (3) muni d'un premier contrepoids (3') et un second arbre d'équilibrage (4) muni d'un second contrepoids (4'), ces deux arbres étant installés l'un au-dessus de l'autre dans la direction verticale (H) du moteur à combustion interne,
- et au moins un arbre d'équilibrage (3, 4) est entraîné en rotation par le vilebrequin (2) à une vitesse de rotation double du celle du vilebrequin et l'autre arbre d'équilibrage (4, 3) est entraîné à une vitesse de rotation double de celle du vilebrequin et dans le sens de rotation opposé à celui de l'arbre d'équilibrage (3, 4) entraîné par le vilebrequin (2),
dispositif **caractérisé en ce que**
le premier et le second arbre d'équilibrage (3, 4) sont installés de façon qu'en rotation des arbres d'équilibrage (3, 4) le premier et le second contrepoids (3', 4') engrènent l'un avec l'autre et
l'entraînement du premier et du second arbres d'équilibrage (3, 4) se fait par l'arbre traversant (5) d'une pompe de graissage (6) entraînée par le vilebrequin (2).

2. Dispositif selon la revendication 1,
**caractérisé en ce que**
les arbres d'équilibrage (3, 4) sont décalés dans la direction transversale (Q) du moteur à combustion interne.

3. Dispositif selon les revendications 1 ou 2, les arbres d'équilibrage tournant autour d'un axe de rotation,
**caractérisé en ce que**
les axes de rotation sont écartés dans la direction verticale (H) du moteur à combustion interne au plus de la course d'un piston (a).

4. Dispositif selon l'une des revendications 1 à 3,
**caractérisé en ce qu'**
un arbre d'équilibrage (3, 4) est entraîné par l'autre arbre d'équilibrage (4, 3) par des premiers pignons droits (7) en prise.

5. Dispositif selon l'une des revendications 1 à 3,
**caractérisé en ce que**
le premier ou le second arbre d'équilibrage (3, 4) est entraîné par l'arbre traversant (5) par des seconds pignons droits (8) en prise.

6. Dispositif selon l'une des revendications 1 à 5,
**caractérisé en ce que**
le premier ou le second arbre d'équilibrage (3, 4) ou l'arbre traversant (5) est entraîné par le vilebrequin (2) par l'intermédiaire de pignons droits en prise ou par une chaîne (9).
